# EUROPEAN PATENT APPLICATION

(11) **EP 3 106 423 A1**
(43) Date of publication of application: **21.12.2016**
(21) Application number: 16174889.2
(22) Date of filing: 17.06.2016
(51) Int. Cl.: B66F 9/075, B66F 9/24, B66F 17/00, B60K 28/16

(54) **SYSTEMS AND METHODS FOR WEIGHT DETERMINATION AND CLOSED LOOP SPEED CONTROL**

(30) Priority: 19.06.2015 US 201562182338 P
(71) Applicant: THE RAYMOND CORPORATION, Greene, New York 13778 (US)
(72) Inventor: DRISCALL, Daniel Robert, New York, NY New York 13778-0130 (US); GREENE, Robert Walter, New York, NY New York 13778-0130 (US)
(74) Representative: advotec.

(57) **Abstract**

A material handling vehicle control systems (100) and methods comprise a plurality of sensors (102; 104), the plurality of sensors coupled to a material handling vehicle; a data collection system; a processor (106), the processor executing a real time weight calculation program, the weight calculation program comprising the steps of receiving data from the plurality of sensors; and combining the data from the plurality of sensors to continuously determine a real time weight value of a load of the material handling vehicle; the processor controlling a speed of the material handling vehicle based on at least the real time weight value.

## Description

### CROSS REFERENCE TO RELATED APPLICATIONS

The present application is based on, claims priority to, and incorporates herein by reference in its entirety, United States Provisional Patent Application No. 62/182,338, filed June 19, 2015, and entitled "Systems and Methods for Weight Determination and Closed Loop Speed Control."

### STATEMENT OF FEDERALLY SPONSORED RESEARCH OR DEVELOPMENT

Not applicable.

### FIELD OF THE INVENTION

The present invention relates to material handling vehicles. More particularly, the invention relates to systems and methods for determining a load weight and to controlling the speed of a material handling vehicle using closed loop control.

### BACKGROUND

Material handling vehicles are commonly found in warehouses, factories, shipping yards, and, generally, wherever pallets, large packages, or loads of goods are required to be transported from place to place. Material handling vehicles typically include load bearing forks for lifting packages or pallets for transporting, a drive motor for propelling the truck, a steering control mechanism, and a brake.

Material handling vehicles often transport various materials of varying weights. This weight can have a significant impact on the operation of the material handling vehicle due to the additional load placed on the material handling vehicle. For example, heavier objects can require more power to operate the material handling vehicle.

Further, when the material is being transported by a material handling vehicle capable of elevating the load, such as a fork truck, the elevation of the load, in combination with the weight, can affect the operation of the vehicle. This can include stability where the load may be elevated above a predetermined level for the given weight.

Thus, mechanisms have been integrated into material handling vehicles to attempt to address the issues associated with transporting variously weighted loads using a material handling vehicle. For example, power limitations based on mapped speeds have been used in certain implementations. This type of power-based, mapped speed control relies on open loop speed control which is not reproducible where tight tolerances are required, due to the open loop nature of this type of control. Further, the open loop operation results in high levels of inaccuracy, forcing the system to take a conservative approach, which can result in the material handling vehicles being operated at less than optimal speeds.

Additionally, after market systems have been used to account for the weight of material being transported by a material handling vehicle. For example, strain gauges can be installed on material handling portions of the material handling vehicles, such as the forks on a fork or pallet truck. The strain gauges can measure the weight placed on the load carrying portions of the material handling vehicles. However, after market strain gauges are often not cost effective, and are prone to failures as a result of mechanical contact. Alternatively, various proximity sensors (ultrasonic, light, vision, etc.) can be installed on a material handling vehicle to detect parameters associated with transporting a load, such as the height or presence of a load. However, these types of sensors have the disadvantage of assuming that the load is of a fixed weight and/or density. This can result in inaccurate load estimations and, therefore, improper speed control.

Therefore, it is desirable to provide systems and methods for accurately determining a weight of a load being transported by material handling vehicle and to use that information to provide closed loop speed control.

### SUMMARY OF THE INVENTION

The present invention provides for a material handling vehicle that includes a material handling vehicle control system comprising a plurality of sensors, the plurality of sensors coupled to a material handling vehicle. The control system further comprising a data collection system and a processor. The processor executing a real time weight calculation program, the weight calculation program comprising the steps of receiving data from the plurality of sensors; and combining the data from the plurality of sensors to continuously determine a real time weight value of a load of the material handling vehicle; the processor controlling a speed of the material handling vehicle based on at least the real time weight value.

In some embodiments, at least one of the plurality of sensors is a height sensor.

In some embodiments, the height sensor is a linear potentiometer.

In some embodiments, at least one of the plurality of sensors is a pressure sensor for measuring a hydraulic pressure of the material handling vehicle.

In some embodiments, the processor is a field programmable gate array.

In some embodiments, a data collection device can be included, the data collection device receiving operational data from the processor.

In some embodiments, the data collection device communicates with the processor via a wireless connection.

In some embodiments, the wireless connection is a Wi-Fi connection.

In some embodiments, the processor identifies operational patterns based on the data from the plurality of sensors, the operational patterns providing data relating to at least one operational condition of the material handling vehicle.

In some embodiments, the at least one operational condition is at least one of operator data, material handling vehicle operation data, loss of load data, battery sizing data, and maintenance data.

In some embodiments, the material handling vehicle is a pallet truck.

In some embodiments, the plurality of sensors includes at least one height sensor and at least one pressure sensor; and combining the data from the plurality of sensors includes combining height sensor data from the at least one height sensor with pressure sensor data from the at least one pressure sensor.

In accordance with another embodiment of the invention, methods are disclosed for speed control of a material handling vehicle. The methods comprise receiving data at a processor from a plurality of sensors coupled to the material handling vehicle; using the processor, combining the data from the plurality of sensors to continuously determine a real time weight value of a load of the material handling vehicle; and controlling a speed of the material handling vehicle based on at least the real time weight value.

In some embodiments, the method can further include identifying operational patterns based on the data from the plurality of sensors, the operational patterns providing data relating to at least one operational condition of the material handling vehicle.

In some embodiments the at least one operational condition is at least one of operator data, material handling vehicle operation data, loss of load data, battery sizing data, and maintenance data.

In some embodiments, the plurality of sensors includes at least one height sensor and at least one pressure sensor; and combining the data from the plurality of sensors includes combining height sensor data from the at least one height sensor with pressure sensor data from the at least one pressure sensor.

In some embodiments, combining the data from the plurality of sensors includes continuously determine a real time weight value of a load of the material handling vehicle and continuously determining a real time height value of the load of the material handling vehicle; and controlling a speed of the material handling vehicle based on at least the real time weight value and the real time height value.

In some embodiments, the method can further include using a closed loop speed control for controlling the speed of the material handling vehicle based on at least the real time weight value.

These and other features, aspects, and advantages of the present invention will become better understood upon consideration of the following detailed description, drawings and appended claims.

### BRIEF DESCRIPTION OF THE DRAWINGS

FIG. 1 is a system view illustrating the implementation of multiple sensors in a material handling vehicle control system.
FIG. 2 is an exploded view of a material handling vehicle linkage assembly.

### DETAILED DESCRIPTION OF THE PREFERRED EMBODIMENT

Before any embodiments of the invention are explained in detail, it is to be understood that the invention is not limited in its application to the details of construction and the arrangement of components set forth in the following description or illustrated in the following drawings. The invention is capable of other embodiments and of being practiced or of being carried out in various ways. Also, it is to be understood that the phraseology and terminology used herein is for the purpose of description and should not be regarded as limiting. The use of "including," "comprising," or "having" and variations thereof herein is meant to encompass the items listed thereafter and equivalents thereof as well as additional items. Unless specified or limited otherwise, the terms "mounted," "connected," "supported,'' and "coupled" and variations thereof are used broadly and encompass both direct and indirect mountings, connections, supports, and couplings. Further, "connected" and "coupled" are not restricted to physical or mechanical connections or couplings.

The following discussion is presented to enable a person skilled in the art to make and use embodiments of the invention. Various modifications to the illustrated embodiments will be readily apparent to those skilled in the art, and the generic principles herein can be applied to other embodiments and applications without departing from embodiments of the invention. Thus, embodiments of the invention are not intended to be limited to embodiments shown, but are to be accorded the widest scope consistent with the principles and features disclosed herein. The following detailed description is to be read with reference to the figures, in which like elements in different figures have like reference numerals. The figures, which are not necessarily to scale, depict selected embodiments and are not intended to limit the scope of embodiments of the invention. Skilled artisans will recognize the examples provided herein have many useful alternatives and fall within the scope of embodiments of the invention.

It is also to be appreciated that material handling vehicles are designed in a variety of configurations to perform a variety of tasks. It will be apparent to those of skill in the art that the present invention is not limited to material handling vehicles of a particular type or purpose, and can also be provided in various other types of material handling vehicle configurations, including, for example, pallet trucks, reach vehicles, order pickers, narrow-aisle turret trucks, and any other material handling vehicle.

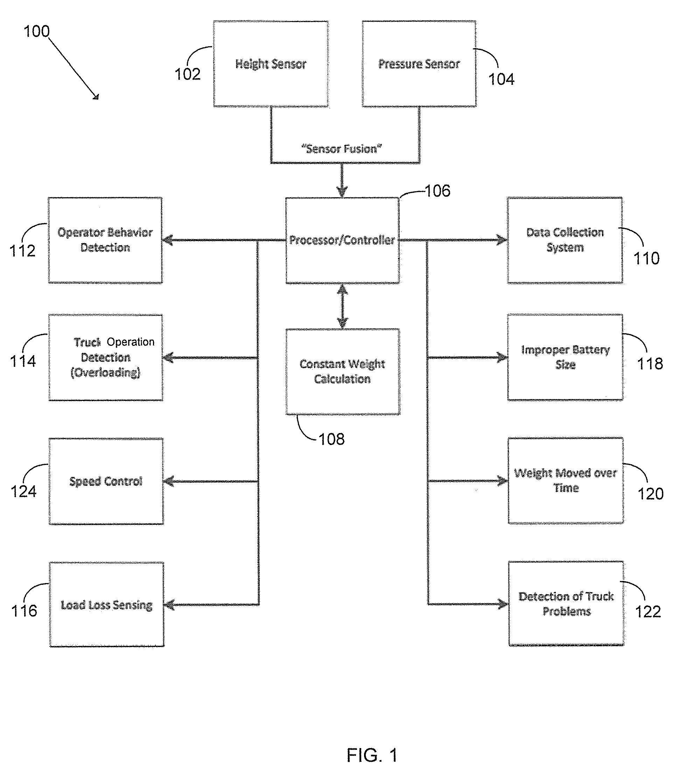

Referring to FIG. 1, a control system 100 for a material handling vehicle can be seen. The control system 100 can have a plurality of sensors. In one embodiment, the control system 100 can have a height sensor 102 and a pressure sensor 104. In one embodiment, the height sensor 102 can be a linear potentiometer. Alternatively, the height sensor 102 can be an ultrasonic sensor, an optical sensor, a light sensor, an angle sensor, a linear proximity sensor, or other applicable sensors for determining height or distance. The height sensor 102 can be an analog sensor that outputs an analog value. Alternatively, the height sensor can output a digital signal. The height sensor 102 can be used to determine the height of the forks in a pallet truck. Additionally, the height sensor 102 can be used to determine the height of the load being transported.

The pressure sensor 104 can be used to determine a pressure of the hydraulic system associated with supporting a load. The pressure sensors can be installed into a hydraulic cylinder to determine the pressure of the hydraulic fluid within the sensor. Alternatively, pressure sensors 104 such as strain gauges or angular sensors can be used. Alternatively, the pressure sensors 104 can be replaced with a lift pump motor torque sensor, or a tachometer in combination with voltage and current sensors to determine a torque (work) required to lift a given load. In one embodiment, the pressure sensor 104 can provide an analog output, such as a 4-20mA signal. Alternatively, the pressure system can include an analog to digital converter to allow for a digital value to be output. Pressure sensors 104 and height sensors 102 can be more cost effective than typical weight or strain gauges. Further, height sensors 102 and pressure sensors 104 can be robust and less susceptible to mechanical contact associated with material handling vehicles. Further, while not shown, additional sensors could also be installed, such as inertia sensors, positional sensors, piezoelectric sensors, etc.

Data from the plurality of sensors can then be provided to a processor 106 of the control system 100. The processor 106 can be a stand alone processor, or can be integrated with a material handling vehicle controller. In one embodiment, the processor 106 can be an FPGA. Alternatively, the processor 106 can be an ARM processor, an ASIC, an Intel^{®} based processor, or other processor capable of executing the required software and performing the required functions. The processor 106 can receive data relating to operations of the material handling vehicle, as well as the state of the material handling vehicle. For example, operational data of the material handling vehicle can include lifting, lowering, travel, angle of the load, direction of travel (forward/reverse), etc. State data can include battery power remaining, hours of operation, fluid levels, etc.

In one embodiment, the processor 106 can include software 108 to fuse the data from the plurality of sensors, along with operational and state data of the material handling vehicle to calculate a constant weight of the load. The software 108 can be stored in a memory coupled to the processor. The software 108 can use the operational and state data, in combination with the data from the height sensor 102 and pressure sensor 104 to calculate a weight of a load. In one embodiment, the software 108 can continually calculate the weight of the load to provide real-time weight data. The weight measurement calculated by the software 108 can be averaged to provide a consistent reading. Averaging the calculated weight can provide consistent readings when operating in non-standard conditions, such as when traveling over uneven surfaces. Using data from a plurality of sensors, including height sensor 102 and pressure sensor 104, a real time calculated weight of the load can be determined whether the material handing vehicle is stopped or moving, while taking the non-linearity of the lift system into account.

Fusing the data from the plurality of sensors, or "data fusion," as described above can allow for the fused data to have less uncertainty than if the data from the plurality of sensors were used individually. The processor 106 can perform the data fusion. Further, the software 108 can fuse the data from the plurality of sensors together when calculating the weight of the load.

In one embodiment, once the initial weight calculation has been performed, the processor 106 can begin data collection. In one embodiment, the processor 106 can provide the real time weight data to a data collection system 110. Additionally, the processor 106 can provide the operational and state data of the material handling vehicle to the data collection system 110. The data collection system 110 can be located on the material handling vehicle. Alternatively, the data collection system 110 can be located remotely from the material handling vehicle. Where the data collection system 110 is located remotely from the material handling vehicle, the processor 106 can transmit data wirelessly to the data collection system 110. In one embodiment, the processor 106 can transmit the data wirelessly using Wi-Fi communication. In one embodiment, the data collection system 110 can store the data for later analysis. Alternatively, the data collection system 110 can process the received data to determine operational parameters, such as labor efficiency, machine utilization, work done, operator efficiency, warehouse efficiency, predictive maintenance, warehouse floor conditions, etc. In one embodiment, the data collection system 110 can process the received data using the processor 106.

The processor 106 can also identify patterns within the sensor feedback. These patterns can be based on the calculated weight provided by software 108. Additionally, the patterns can also be based on the received operational and state data of the material handling vehicle. Identification of patterns in the sensory feedback can allow for the processor to detect and evaluate problems with the material handling vehicle.

In one embodiment the processor 106 can use the identified patterns to determine operator behavior at module 112. Operator behavior data can include operator efficiency, operator up-time, operator driving habits including speed, translational movements *(i. e.* up and down), etc. This operator behavioral data can be used to provide feedback to an operator. Further, it can provide management with an overview of operator operational statistics for evaluation. For example, weight moved per time period, average weight moved, etc. Additionally, job coding and operator identification can be used to provide more detailed statistics. In one embodiment, operator identification can be determine based on the operator identification badge, which can be required to be read prior to operation of the material handling vehicle.

Further, the processor can use the identified patterns to detect material handling vehicle operation at module 114. Material handling vehicle operation can include overloading (*i.e*. transporting loads above the rating of the material handling vehicle), excessive speeds, or any other operation that could impact the operation or condition of the material handling vehicle.

The processor 106 can also use the identified patterns to determine if there has been a loss of load at module 116. By fusing data from a plurality of sensors and taking an average of the real time calculated data, the control system 100 can better determine when there has been an actual load loss situation. For example, using the averaged weight data allows for transient variations in the calculated weight to be accounted for. For example, rough terrain or quick operator movements can sometimes result in data that indicates a load loss condition. By relying on identified patterns and averaged real time data, these transient variations can be accounted for and factored into the load loss determination.

Additionally, the identified patterns can be used to determine if the battery of the material handling vehicle is improperly sized at module 118. For example, the processor 106 can determine patterns of battery changes in combination with other factors, such as the weight of the loads, average speed of the material handling vehicle, etc., to determine if the battery is correctly sized for that particular vehicle/application. Additionally, at module 118, it can be determined if the wrong type of battery has been installed, such as a shop pack being installed instead of a required traction battery. The identified patterns can also be used to determine weight moved over time at module 120. Further, the identified patterns can be used to detect possible maintenance for the material handling vehicle at module 122. For example, operational times, limited maximum speeds, load imbalance, etc., can all indicate possible maintenance for the material handling vehicle.

In one embodiment, the processor 106 can also use the identified patterns, as well as the real time calculated weight of the load to control the speed of the material handling vehicle at process block 124. By having a real time calculated weight of the load, the processor 106 can utilize closed loop control to constantly control the speed of the material handling vehicle. For example, where the calculated weight is known, the speed of the material handling vehicle may be reduced where heavy loads are present. Further, where the load is both heavy and elevated, such as by raising the forks of a pallet truck, the speed may be further reduced to ensure stability of the material handling vehicle. Additionally, the real time calculated weight can indicate a state of the floor conditions, such as an uneven surface. This information can be used to limit the top speed to ensure normal operation of the material handling vehicle, as well as to reduce potential wear and tear on components, thereby increasing the operational life of the material handling vehicle and its associated components.

The real time calculated weight allows for real time response by the speed control module 124. Further, closed loop control is possible as the real time calculated weight can constantly update the speed control module 124 based on constantly changing loads and/or conditions. Additionally, the data fusion performed by the processor allows for reduced uncertainty in the measurements, allowing for accurate, reliable, and efficient speed control determinations to be made by the speed control module 124. Additionally, closed loop speed control can improve productivity of load picking by allowing the material handling vehicle to be operated at higher speeds. Accurate, real time weight can allow higher top speeds while still controlling required stopping distances.

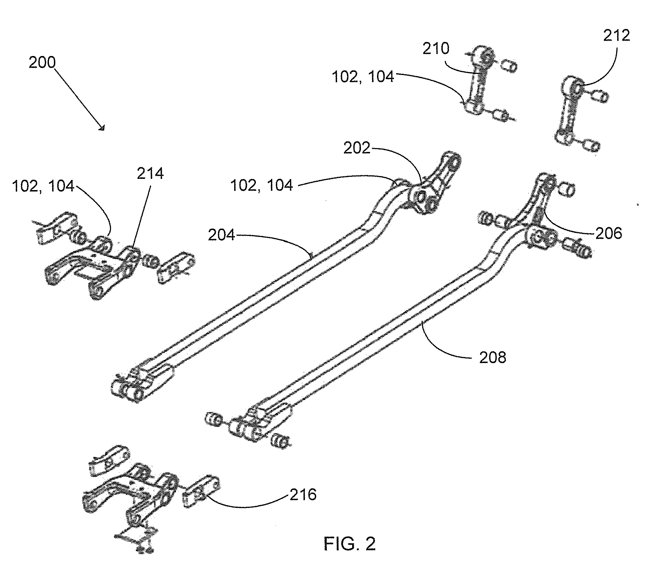

FIG. 2 shows an exemplary material handling vehicle linkage 200 typically associated with fork operation. The height sensor 102 can be positioned on or between a linkage 202 and/or a fork 204 to determine a height value of fork 204. Alternatively, the height sensor can be positioned on or between a linkage 206 and a fork 208. In another embodiment, height sensors 102 can be positioned between both linkage 202 and fork 204, and linkage 206 and fork 208 to provide a height value for each individual fork 206, 208. In another embodiment, the height sensor 102 can be positioned on or between upper linkage 210 and linkage 202 to provide a height value of fork 204. The height sensor can alternatively be positioned on or between upper linkage 212 and linkage 204 to provide a height value of fork 208. Further, height sensors 102 can be positioned on or between upper linkage 210 and linkage 202, and upper linkage 212 and linkage 206 to determine a height of forks 204 and 208. Load wheel carriers 214 and 216 are also shown, and can also include a height sensor 102. Similarly, in some embodiments, a pressure sensor 104 can be positioned in any of the locations identified above to measure a pressure associated with a weight on the forks.

The present disclosure describes embodiments with reference to the Figures, in which like numbers represent the same or similar elements. Reference throughout this specification to "one embodiment," "an embodiment," or similar language means that a particular feature, structure, or characteristic described in connection with the embodiment is included in at least one embodiment of the present invention. Thus, appearances of the phrases "in one embodiment," "in an embodiment," and similar language throughout this specification may, but do not necessarily, all refer to the same embodiment.

The described features, structures, or characteristics of the embodiments may be combined in any suitable manner in one or more embodiments. In the description, numerous specific details are recited to provide a thorough understanding of embodiments of the invention. One skilled in the relevant art will recognize, however, that the embodiments may be practiced without one or more of the specific details, or with other methods, components, materials, and so forth. In other instances, well-known structures, materials, or operations are not shown or described in detail to avoid obscuring aspects of the invention.

Although the above discussion discloses various exemplary embodiments of the invention, it should be apparent that those skilled in the art can make various modifications that will achieve some of the advantages of the invention without departing from the true scope of the invention.

## Claims

1. A material handling vehicle control system comprising:
a plurality of sensors, the plurality of sensors coupled to a material handling vehicle;
a data collection system;
a processor, the processor executing a real time weight calculation program, the weight calculation program comprising the steps of:
receiving data from the plurality of sensors; and
combining the data from the plurality of sensors to continuously determine a real time weight value of a load of the material handling vehicle;
the processor controlling a speed of the material handling vehicle based on at least the real time weight value.

2. The control system of claim 1, wherein at least one of the plurality of sensors is a height sensor.

3. The control system of claim 2, wherein the height sensor is a linear potentiometer.

4. The control system of one of claims 1 to 3, wherein at least one of the plurality of sensors is a pressure sensor for measuring a hydraulic pressure of the material handling vehicle.

5. The control system of one of claims 1 to 4, further comprising a data collection device, the data collection device receiving operational data from the processor.

6. The control system of claim 5, wherein the data collection device communicates with the processor via a wireless connection.

7. The control system of one of claims 1 to 6, wherein the processor identifies operational patterns based on the data from the plurality of sensors, the operational patterns providing data relating to at least one operational condition of the material handling vehicle.

8. The control system of claim 7, wherein the at least one operational condition is at least one of operator data, material handling vehicle operation data, loss of load data, battery sizing data, and maintenance data.

9. The control system of one of claims 1 to 8, wherein the plurality of sensors includes at least one height sensor and at least one pressure sensor; and
combining the data from the plurality of sensors includes combining height sensor data from the at least one height sensor with pressure sensor data from the at least one pressure sensor.

10. A method for speed control of a material handling vehicle, the method comprising:
receiving data at a processor from a plurality of sensors coupled to the material handling vehicle;
using the processor, combining the data from the plurality of sensors to continuously determine a real time weight value of a load of the material handling vehicle; and
controlling a speed of the material handling vehicle based on at least the real time weight value.

11. The method of claim 10, further including identifying operational patterns based on the data from the plurality of sensors, the operational patterns providing data relating to at least one operational condition of the material handling vehicle.

12. The method of claim 11, wherein the at least one operational condition is at least one of operator data, material handling vehicle operation data, loss of load data, battery sizing data, and maintenance data.

13. The method of one of claims 10 to 12, wherein the plurality of sensors includes at least one height sensor and at least one pressure sensor; and
combining the data from the plurality of sensors includes combining height sensor data from the at least one height sensor with pressure sensor data from the at least one pressure sensor.

14. The method of one of claims 10 to 13, wherein combining the data from the plurality of sensors includes continuously determine a real time weight value of a load of the material handling vehicle and continuously determining a real time height value of the load of the material handling vehicle; and
controlling a speed of the material handling vehicle based on at least the real time weight value and the real time height value.

15. The method of one of claims 10 to 14, further including using a closed loop speed control for controlling the speed of the material handling vehicle based on at least the real time weight value.
